Europäisches Patentamt

(19) European Patent Office

Office européen des brevets

(11) Publication number: **0 179 502 B1**

# EUROPEAN PATENT SPECIFICATION

(45) Date of publication of patent specification: **10.04.91**

(51) Int. Cl.⁵: **G06K 13/07, B41J 35/36, G06K 17/00**

(21) Application number: **85201130.3**

(22) Date of filing: **09.07.85**

(54) Magnetic character reader-inscriber.

(30) Priority: **26.10.84 ES 282292 U**

(43) Date of publication of application:
**30.04.86 Bulletin 86/18**

(45) Publication of the grant of the patent:
**10.04.91 Bulletin 91/15**

(84) Designated Contracting States:
**AT BE CH DE FR GB IT LI NL SE**

(56) References cited:
**EP-A- 0 019 079**
**GB-A- 1 175 436**
**US-A- 4 058 056**
**US-A- 4 196 846**

**IBM TECHNICAL DISCLOSURE BULLETIN, vol. 15, no. 4, September 1972, page 1253, New York, US; G.D. ANDERSON: "Paper feed aligner mechanism"**

(73) Proprietor: **AMPER S.A.**
**Calle Torrelaguna, no 75**
**Madrid 27(ES)**

(72) Inventor: **Lopez Garcia, Antonio**
**Calle Torrelaguna, 75**
**E-28027 Madrid(ES)**

(74) Representative: **Pieraerts, Jacques et al**
**Bureau Gevers S.A. Rue de Livourne 7, B.1**
**B-1050 Bruxelles(BE)**

Rank Xerox (UK) Business Services

## Description

The invention refers to a reader-inscriber of magnetic characters according to the statement of the first part of claim 1.

Such machines are known (US-A-4196846) for reading characters on a document and then printing a bar code inscription thereon. Here the time for processing the document is very long and a lack of accuracy in the transport of the documents arises frequently.

Various readers or inscribers are known commercially, being in general very big and complicated, the manufacturing costs of which are very high and which, in most cases, are able only to read or only to write.

In order to avoid said problems, there is provided, according to the invention, a reader-inscriber as disclosed in said statement of claim 1 and having the features of the characterizing portion thereof. Improvements to the reader-inscriber according the invention are provided in the other claims.

The machine now proposed, due to its capacity of performing both functions, reading and writing, has the advantages of a carefully studied organization which allows to reduce its manufacturing costs and, especially, of a small size which makes it able to be used in windows or counters providing services to the public, so that treated documents may be encoded and computer processed from the initial operation to simplify the administrative paperwork and to eliminate mistakes.

The small size of the device results from the application of various solutions for feeding and guiding the documents in combination with the procedure used to print the magnetic characters.

The machine is entirely built around a single frame plate on the top face of which there is a guiding element which pulls the documents through a combination of driving rollers, so that the papers go through the printing and reading heads.

Specially worth noting are a first roller which ensures the correct positioning of the document on the guiding element so that it reaches the heads in the appropriate position, as well as the device which starts the movement of the document as soon as the machine is required to operate.

Other features of the equipment are the way in which the printing head works and the existence of a device which detects the end of the magnetic ribbon used by the machine.

These and other special features of the machine will become evident from the following detailed description which will be done with reference to the annexed drawings. These drawings only show the essential mechanical parts of the invention, at the exclusion, for concision, of parts such as the electric circuit plates and the motor frame.

Fig. 1 is a top view of the frame plate, showing the document guiding element, the inscribing mechanism and the reading heads, as well as the layout of the end-of-the-ribbon detector and other features.

Fig. 2 is a view from the bottom of the same frame plate in order to illustrate the way in which transmission is received by the driving rollers which pull the documents.

Fig. 3 is a side elevation view of the frame plate, from which it may especially be noted the inclined position of the first driving roller which, within the guiding element, positions the document to be processed.

Fig. 4 is a second side elevation view showing the pressure rollers which aid the driving rollers to pull the documents through the guide, as well as the printing head and the device which sets off the paper movement., when the machine is set in operation.

Fig. 5 is a longitudinal cross-section of the frame plate along the plane A-B pointed out in Fig. 1, where the document guide has been removed to clearly show how the documents are pulled by the driving rollers.

Fig. 6 is a scheme of the layout of the driving rollers illustrated in the previous figure, together with the pressure rollers with which they drive the documents.

Fig. 7 is a side elevation view of the device, that sets off the paper movement.

Fig. 8 is a top view of the same device.

Fig. 9 represents an elevation view, partially in cross-section, of the combination of the printing head and of its motor, showing its rotation control means.

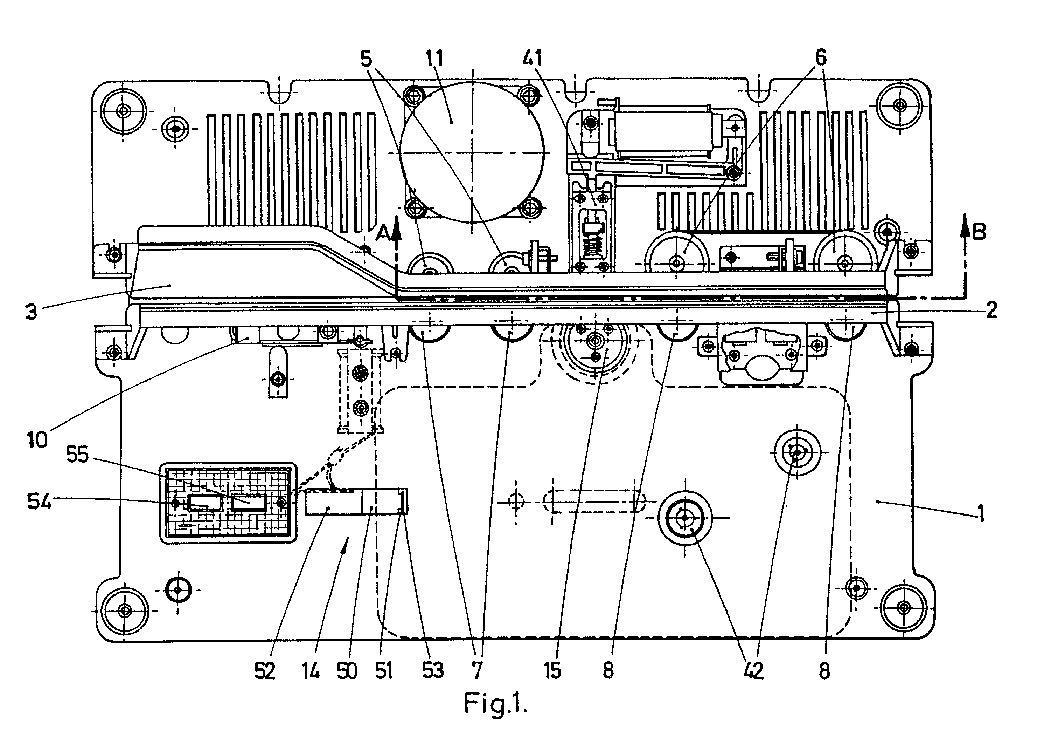

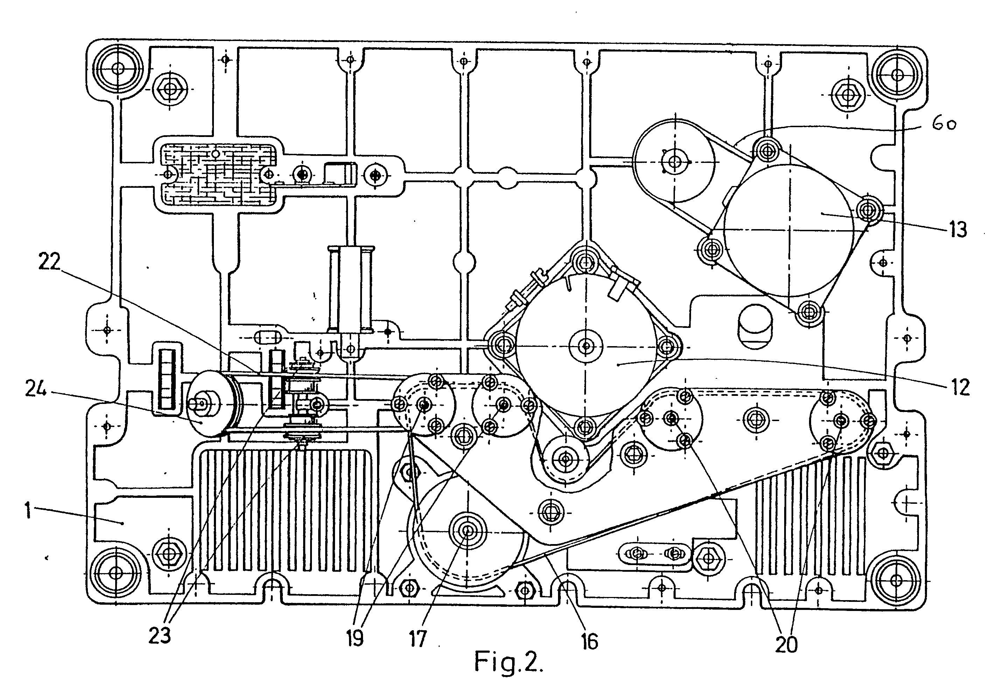

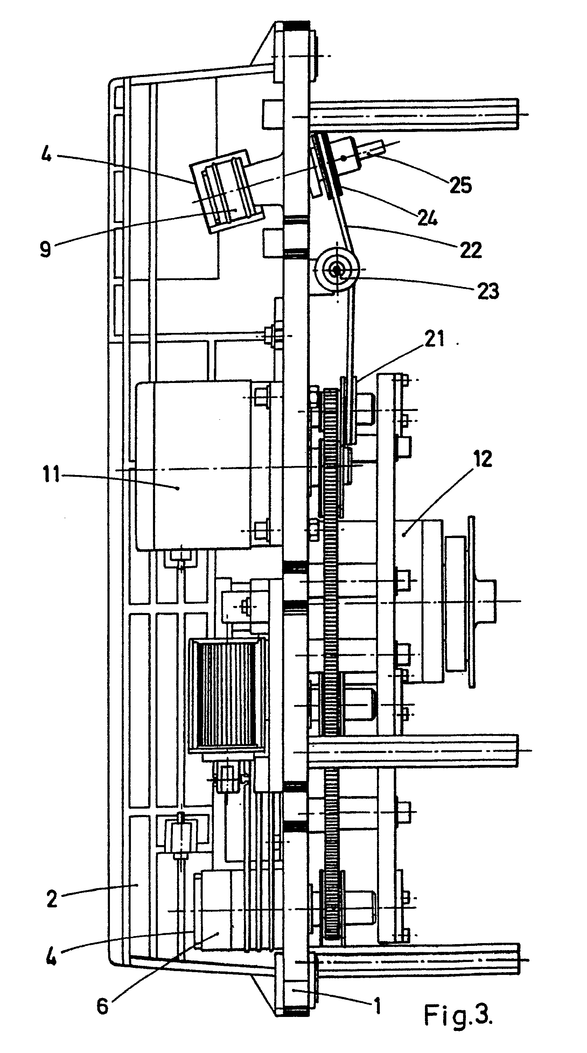

After this general description of the drawings, and starting with a general explanation of the machine which covers it in its entirety, and giving then the details of the various proposed solutions, reference will be at first made to Figures 1 to 4.

As it may be seen, this machine is substantially comprised of a single frame plate (1) along the entire length of which, and on the top, there is a guide (2) for the documents to be processed, which broadens at one of its ends to form an opening (3) which facilitates the introduction of the documents therein. The guide (2) has side openings (4) immediately above the frame plate (1) which allow the penetration of a series of driving rollers (5 and 6) which push the document against the pressure rollers (7 and 8) in order to drive it.

A paper positioning roller (9) and a device that sets it in motion (10), which will be described later on, are located at the beginning of the guide.

The machine has a first motor (11) which moves the driving rollers, a second motor (12) which rotates the printing head (15) (made up by a character, or daisy wheel) and a third motor (13) which simultaneously operates, in the same sense and at different speeds, the pulling axles (42) of the ribbon used by the machine, which are mutually connected by transmission means (60).

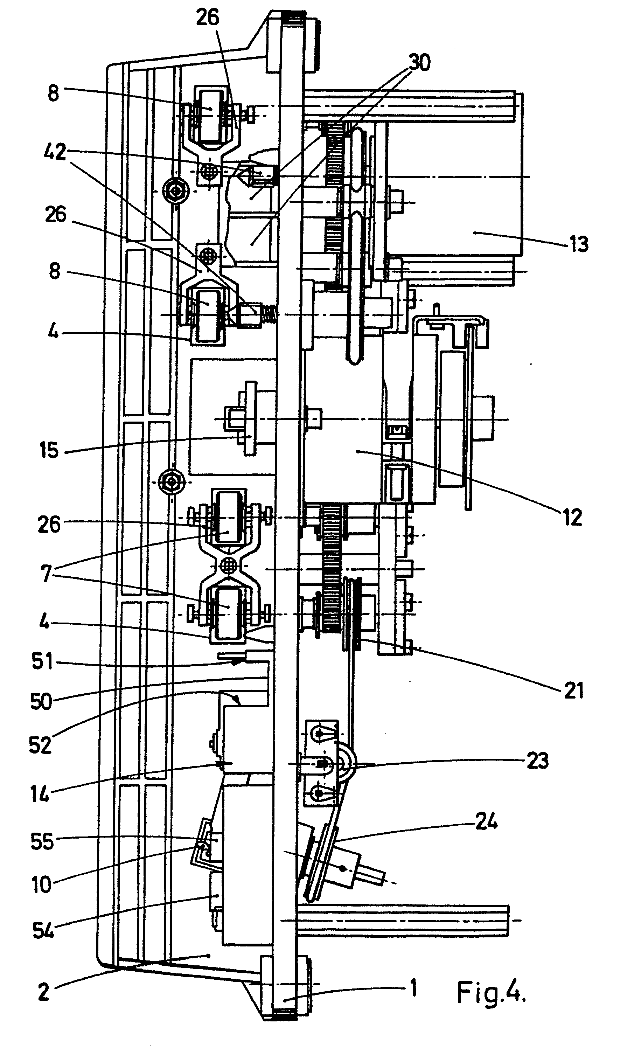

Finally, there is a device which detects the end of the writing ribbon, which may be seen on Figures 1 and 4, under reference numeral (14). The movement of motor (11) is transmitted to the driving rollers (5 and 6) through a toothed belt (16) which gears with the outlet pinion of the driving axle (17), as well as with other pinions located on axles (19) of the rollers (15), and on the axles (20) of the rollers (6).

In addition, on axle (19) of the first roller (5) there is a pulley (21) which, through a belt (22), operates another pulley (24) set on an axle (25) which is inclined with respect to the frame (1), forming a sharp angle in the sense in which the paper is pulled; at top end, this axle (25) bears the positioning roller (9), already mentioned. A set of sheaves (23) whose axle is parallel to the chassis (1), aid the belt (22) to make the change of plane existing between pulley (21) and pulley (24). Driving rollers (5 and 6) as best seen in Figures 1, 4 and 6 receive the pressure of rollers (7 and 8), mounted on elastic laminar armatures (26) (see specially Figure 4) tending to maintain these latter rollers in permanent contact with the above-mentioned driving rollers.

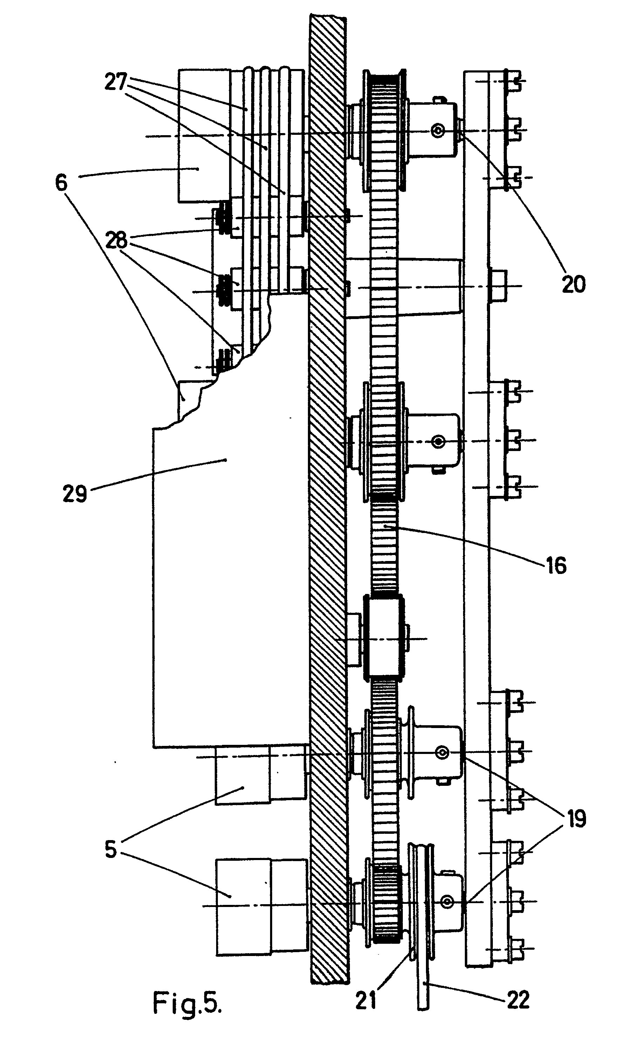

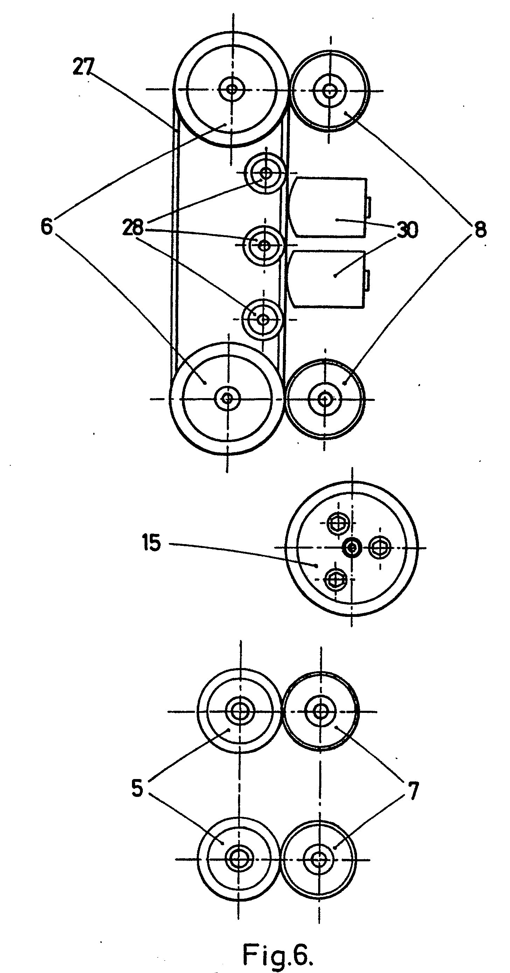

In addition, and as best seen in Figures 5 and 6, the driving rollers(6) placed at the end of the guide (2) are clamped by toric belts (27) and have between them three other small guiding rollers (28), also clamped by the belts (27) with which they make up a mobile, perpendicular back-up surface which forces the document (29) to be in close contact with the magnetic reading heads (30) placed between the rollers (8), as it goes through, pulled by the driving rollers.

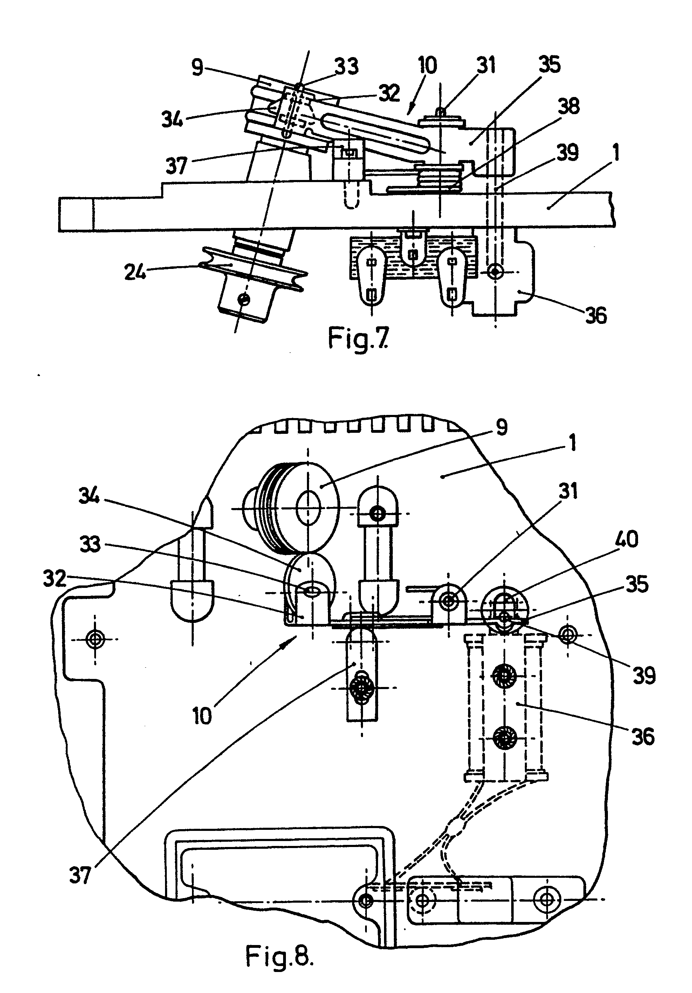

Finally, and with respect to the pulling of documents, the mechanism is furnished with a device that sets it in motion, which works together with the positioning roller (9), already described, which is shown in detail in Figures 7 and 8, where the place it holds within the mechanism in Figures 1 and 4 may be seen.

This device is made up of a first degree lever, articulated around an axis (31) placed perpendicularly on the frame (1) and which has an axis (33) on its resistance end (32), parallel to the positioning roller (9) and which also bears a wheel (34). This resistance end (32) is checked by a torsion spring (38) mounted on the lever axis (31) so that the wheel (34) moves away from the roller (9), and bears against a fixed stop (37) mounted on the frame (1).

On the other hand, the power end (35) of the lever can receive a thrust opposite to the torsion spring tension, through a rod (39) which passes through the frame (1) through a link slot (40) and which is joined to the core of an electromagnet (36).

Through the organization described above, the operation of the pulling mechanism is done as follows :

After introducing the document to be processed through the opening (3) of the guide (2), when the command to operate is received by the machine, the motor starts running (11) setting in motion the driving rollers (5 and 6) by means of the toothed belt (16), and the positioning roller (9) by means of the toroidal belt (22). Immediately, the electromagnet (36) of the device which sets the mechanism in motion receives an impulse which causes lever bearing the wheel (34) to rotate and consequently the approaching of the latter to the positioning roller (9), on which it momentarily presses the document to be processed.

As a consequence of this operation, the document is quickly pulled forward, and its lower edge tends to lie on the bottom of the guide (2) being led by the inclined position of the roller (9) which, in this manner, ensures the correct position of the paper from the start.

The joint action of the wheel (34) and of the roller (9) continues, until the forward edge is held between the first set of driving rollers (5) and the pressure rollers (7), which lead it in front of the daisy wheel (15) and a striking mechanism (47) (which is not a part of the invention).

Afterwards, the document reaches the second set of driving rollers (6) and, being caught between them and the pressure rollers (8) it advances through the support track defined by the toric belts (27) and the guiding rollers (28), where it is exposed, before ending its course, to the action of the reading heads (30), as better illustrated in Figures 5 and 6.

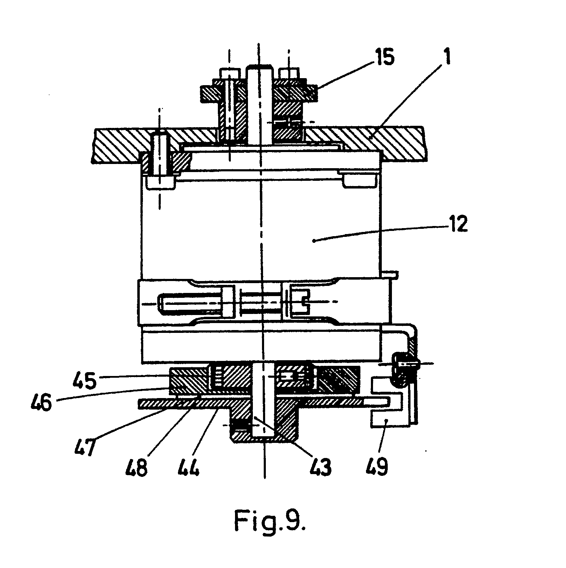

The daisy wheel (15) or printing head, which is set in motion directly by the motor (12), and which, because of its operational position, must very rapidly rotate to the right and to the left, has an inertia absorbing element which allows it to stop in a very brief time before starting a new rotation. This mechanism is shown in detail in Figure 9, and will be explained below.

As it may be seen, this mechanism is made up of a part with a "T"-shaped section (44), anchored to the end of the axis (43) of the motor (12), which is opposite the daisy-wheel bearing end : this part has a spring (45) coiled around its core, through which an inerta mass (46) that may freely and concentrically rotate on the axis (43) is brought axially, being aided by a felt washer (47), against a wheel (48), also anchored on the axis (43) and which also bears a peripheral wing with signals which, combined to the photodetector (49), locate the characters to be printed.

With this structure, when the axis (43) starts rotating in any of both senses, in addition to rotating parts (44) and (48) which are integral with it, the tension of the spring (45) immobilizes the inertia mass (46) with respect to such parts, and the mass also rotates. The movement inertia is then stored by the mass (46), which overpowers the tension of the spring (45) and continues to rotate after the axis has stopped, allowing the daisy wheel to stop exactly at the time and position required.

The last novel characteristic of the proposed equipment consists in a device which detects the end of the ribbon, which is clearly shown in Figures 1 and 4.

The single-use, magnetic ribbon is contained in closed cartridges like that depicted by the dotted line in Figure 1, these cartridges being located on the frame (1) so that a portion of its periphery fits into the center cavity (50) of a generally "U"-shaped part having a reflecting surface (53) on the arm located under the cartridge, and a photodetector on the inner face of the other arm (52). Besides, in the portion fitting inside the cavity (50) of the part (14), the cartdrige has a little window through which the writing ribbon faces the photodetector; the ribbon end is also made of reflecting material.

By means of this structure, whereas the cartridge is set up on the frame, and the ribbon is being used, the photodetector remains neutralized. However, when the ribbon finishes, its reflecting end faces the photodetector, which is activated and lights a pilot lamp (54) preferably located next to another pilot lamp (55) which indicates whether the machine is on or off. Of course, the same effect is obtained by removing the cartridge containing the magnetic writing ribbon, since the reflecting surface (53) located on the arm (51) of the "U"-shaped part directly faces the photodetector and actuates it.

## Claims

1. Reader-inscriber of magnetic characters, comprising
   - a character wheel (daisy wheel) (15) which prints documents through a striking mechanism (47),
   - one or several magnetic reading heads (30),
   - means to lead the documents to be processed by said character wheel and said reading heads, including a guide (2) which is set lengthwise on a frame (1) and on the bottom of which lies an edge of each document to be processed, a paper positioning roller (9), a device (10) which sets the document in motion, and means for driving said document along said guide,
   - a first motor (11) for actuating said means for driving,
   - a second motor (12) for rotating said character or daisy wheel (15), and
   - a third motor (13) for operating axes (42) which drive magnetic writing ribbon, and
   - a detecting device for automatically detecting the end or lack of this ribbon, characterized in that the reader-inscriber further comprises
   - a series of driving rollers (5, 6) as said means for driving the document, which pull the paper in the guide from an opening end (3) to an exit end, while pushing it against several pressure rollers (7, 8),
   - several openings (4) in said guide (2) for allowing the penetration of said paper positioning roller (9), of said device (10) which sets the paper in motion and of said series of driving rollers (5, 6), all of them being actuated by said first motor (11), and
   - an inertia absorbing mechanism which aids said second motor (12) to rotate the character or daisy wheel (15) and to stop it exactly,
   - said third motor (13) simultaneously operating, in the same sense and at different speeds, said driving axes of the magnetic writing ribbon, which are mutually connected by transmission means (60).

2. Reader-inscriber of magnetic characters as claimed in claim 1, characterized by the fact that the driving rollers (5,6) are actuated by a motor by means of a toothed belt (16) which is in gear with the outlet exit pinion of the motor and with pinions set on their respective axes, with the special characteristic that a pulley (21) is set on one of these pinions, which transmits movement to it through a toric belt, aided by a couple of sheaves (23), whose axle lies on a plane perpendicular to the driving rollers and extends to the inclined axis (25) of a positioning roller (9).

3. Reader-inscriber of magnetic characters as claimed in claim 1 or 2, characterized by the fact that the inclined axis of the paper positioning roller (9) forms a sharp angle with the frame plane in the sense in which the paper advances.

4. Reader-inscriber of magnetic characters as claimed in claim 1, characterized by the fact that the pressure rollers which act on the driving rollers are set on elastic laminar armatures (26).

5. Reader-inscriber of magnetic characters as claimed in claim 1, characterized in that the couple of driving rollers located at the exit end of the guide are clamped by a toric belt (27) and have, between them, three other small guiding rollers (28), also clamped by the belts, so that, together, they make up a perpendicular and mobile support surface which faces the magnetic reading heads (30).

6. Reader-inscriber of magnetic characters as claimed in claim 1, characterized by the fact that the device which sets it in motion is formed of a first degree lever, articulated around an axis (31) perpendicular to the frame (1), whose lever, on its resistance end (32), has a wheel (34) whoxe axis is parallel to the positioning rollers, whereas on its power end (35), it receives the thrust of a rod (39) passing through the frame through a link slot (40) and joined to the core of an electromagnet (36), so that the electromagnet activation determines the approaching of the resistance wheel to the positioning roller (9), acting against a torsion positioning spring which is set up around the lever axis and which keeps the wheel and the rollr apart when the electromagnet is deactivated.

7. Reader-inscriber of magnetic characters as claimed in claim 1, characterized by the fact that the inertia absorption mechanism which helps the daisy wheel to rotate, which is made up by a part with a "T"-shaped section (44), anchored to the end of the motor axis which is opposite the daisy wheel bearing end, this part having a spring (45) coiled around its core through which an inertial mass (46) that may freely and concentrically rotates on its axis (43), is brought axially, being aided by a felt washer (47) against a wheel (48), also anchored on the motor axis and which, in addition, bears a peripheral wing with signals which, in combination with a photodetector (49), locate the position of the characters to to be printed.

## Revendications

1. Dispositif de lecture-inscription de caractères magnétiques, comprenant :
   - une roue d'impression (roue marguerite) (15) qui imprime des documents par l'intermédiaire d'un mécanisme de frappe (47),
   - une ou plusieurs têtes de lecture magnétiques (30),
   - des moyens pour conduire les documents de façon qu'ils soient traités par la roue d'impression et les têtes de lecture, comprenant un guide (2) qui est disposé longitudinalement sur un châssis (1) et sur le fond duquel repose un bord de chaque document à traiter, un rouleau de positionnement du papier (9), un dispositif (10) qui met le document en mouvement, et des moyens pour entraîner le document le long du guide,
   - un premier moteur (11) pour actionner lesdits moyens d'entraînement,
   - un second moteur (12) pour entraîner en rotation la roue d'impression (15), et
   - un troisième moteur (13) pour faire fonctionner des axes (42) qui entraînent un ruban magnétique à écrire, et
   - un dispositif de détection pour détecter automatiquement la fin ou l'absence de ce ruban,
   caractérisé en ce que le dispositif de lecture-inscription comprend en outre :
   - une série de rouleaux d'entraînement (5, 6), à titre de moyens pour entraîner le document, qui tirent le papier dans le guide depuis une extrémité d'ouverture (3) jusqu'à une extrémité de sortie, tout en le poussant contre plusieurs rouleaux de pression (7, 8),
   - plusieurs ouvertures (4) dans le guide (2) pour permettre la pénétration du rouleau de positionnement de papier (9), du dispositif (10) qui met le papier en mouvement et de ladite série de rouleaux d'entraînement (5, 6), tous ceux-ci étant actionnés par le premier moteur (11), et
   - un mécanisme d'absorption d'inertie qui aide le second moteur (12) à entraîner en rotation la roue d'impression (15) et à l'arrêter de manière exacte,
   - le troisième moteur (13) mettant simultanément en marche, dans le même sens et à des vitesses différentes, lesdits axes d'entraînement du ruban magnétique à écrire, ces axes étant mutuellement reliés par des moyens de transmission (60).

2. Dispositif de lecture-inscription de caractères magnétiques suivant la revendication 1, caractérisé en ce que les rouleaux d'entraînement (5, 6) sont actionnés par un moteur au moyen d'une courroie dentée (16) qui est en prise avec le pignon de sortie du moteur et avec des pignons placés sur leur axe respectif, avec la caractéristique spéciale qu'une poulie (21) est placée sur l'un de ces pignons qui lui transmet un mouvement par une courroie torique, qui est aidée par un couple de roues à gorge (23), dont l'axe se trouve sur un plan perpendiculaire aux rouleaux d'entraînement, et qui s'étend vers l'axe incliné (25) d'un rouleau de positionnement (9).

3. Dispositif de lecture-inscription de caractères magnétiques suivant l'une des revendications 1 et 2, caractérisé en ce que l'axe incliné du rouleau de positionnement de papier (9) forme un angle aigu avec le plan du châssis dans le sens dans lequel le papier avance.

4. Dispositif de lecture-inscription de caractères magnétiques suivant la revendication 1, caractérisé en ce que les rouleaux de pression qui agissent sur les rouleaux d'entraînement sont placés sur des armatures laminaires élastiques (26).

5. Dispositif de lecture-inscription de caractères magnétiques suivant la revendication 1, caractérisé en ce que le couple de rouleaux d'entraînement situé à l'extrémité de sortie du guide est pincé par une courroie torique (27) et en ce que ces rouleaux ont, entre eux, trois autres petits rouleaux de guidage (28), également pincés par les courroies, de façon qu'ensemble ils réalisent une surface de support perpendiculaire et mobile qui se trouve en face des têtes de lecture magnétiques (30).

6. Dispositif de lecture-inscription de caractères magnétiques suivant la revendication 1, caractérisé en ce que le dispositif qui le met en mouvement est formé d'un levier du premier degré, articulé autour d'un axe (31) perpendiculaire au châssis (1), dont le levier, sur son extrémité de résistance (32), présente une roue (34) dont l'axe est parallèle aux rouleaux de positionnement tandis que sur son extrémité de puissance (35) il reçoit la poussée d'une tige (39) passant à travers le châssis par une fente de liaison (40) et reliée au noyau d'un électro-aimant (36) de façon que l'activation de l'électro-aimant détermine l'approche de la roue à résistance vers le rouleau de positionnement (9), en agissant contre un ressort de positionnement à torsion qui est disposé autour de l'axe de levier et qui garde la roue et le rouleau écartés lorsque l'électro-aimant est désactivé.

7. Dispositif de lecture-inscription de caractères magnétiques suivant la revendication 1, caractérisé en ce que le mécanisme d'absorption d'inertie qui aide à tourner la roue d'impression est fait d'une partie ayant une section en forme de T (44), ancrée à l'extrémité de l'axe de moteur qui est opposée à l'extrémité supportant la roue d'impression, cette partie présentant un ressort (45) enroulé autour de son noyau, ressort par lequel une masse d'inertie (46) qui peut tourner librement et concentriquement sur son axe (43), est amenée axialement, en étant aidée par une rondelle de feutre (47) contre une roue (48), également ancrée sur l'axe du moteur et qui, en plus, porte une aile périphérique avec des signaux qui, en combinaison avec un photodétecteur (49), situent la position des caractères à imprimer.

## Ansprüche

1. Eine Lese-Beschriftungsvorrichtung für magnetische Zeichen, mit:
   - einem Typenrad (daisy wheel) (15), welches Dokumente über einen Anschlagmechanismus (47) bedruckt,
   - einem oder mehreren magnetischen Leseköpfen (30),
   - einer Einrichtung, um die durch das Typenrad und die Leseköpfe zu verarbeitenden Dokumente zu führen, wobei die Einrichtung eine Führung (2) welche längs auf einem Rahmen (1) angebracht ist und auf dessen Boden ein Rand von dem jeweiligen zu verarbeitenden Dokument aufliegt, eine Papierpositionierrolle (9), eine Einrichtung (10), welche das Dokument in Bewegung setzt, und eine Einrichtung für den Antrieb des Dokumentes längs der Führung enthält,
   - einem ersten Motor (11) zum Betätigen der Antriebseinrichtung,
   - einem zweiten Motor (12) zum Drehen des Typenrades (15), und
   - einem dritten Motor (13) zum Betätigen von Achsen (42), welche ein magnetisches Schreibband antreiben, und
   - einer Detektoreinrichtung zum automatischen Erfassen des Endes oder des Fehlens des Bandes;
   **dadurch gekennzeichnet,** daß die Lese-Beschriftungsvorrichtung weiterhin umfaßt:

- eine Reihe von Antriebsrollen (5, 6) als die Einrichtung für den Antrieb des Dokumentes, wobei die Rollen das Papier in der Führung von einem Öffnungsende (3) zu einem Ausgangsende ziehen, während es gegen verschiedene Druckrollen (7, 8) gedrückt wird,
- mehrere Öffnungen (4) in der Führung (2), um das Hindurchtreten der Papierpositionierrolle (9), der Einrichtung (10), welche das Papier in Bewegung setzt, und der Reihe von Antriebsrollen (5, 6), von denen alle von dem ersten Motor (11) angetrieben werden, zu ermöglichen, und
- einen Trägheitsabsorptionsmechanismus, welcher den zweiten Motor (12) unterstützt, um das Typenrad (15) zu drehen und es exakt anzuhalten,
- wobei der dritte Motor (13) gleichzeitig, in gleicher Richtung und mit unterschiedlichen Geschwindigkeiten, die Antriebsachsen des magnetischen Schreibbandes, welche gegenseitig durch eine Transmissionseinrichtung (20) verbunden sind, betätigt.

2. Lese-Beschriftungsvorrichtung für magnetische Zeichen nach Anspruch 1,
   **gekennzeichnet durch**
   die Tatsache, daß die Antriebsrollen (5, 6) durch einen Motor mit Hilfe eines Zahnriemens (16) angetrieben werden, welcher im Eingriff mit dem Ausgangsritzel des Motors und mit auf ihren jeweiligen Achsen angebrachten Ritzeln ist, mit dem speziellen Kennzeichen, daß an einem von diesen Ritzeln eine Riemenscheibe (21) angebracht ist, welche Bewegung zu ihm über einen wulstförmigen Riemen überträgt, unterstützt durch ein Paar von Seilscheiben (23), deren Achsen in einer Ebene senkrecht zu den Antriebsrollen liegt und sich zu der geneigten Achse (25) von einer Positionierrolle (9) erstreckt.

3. Eine Lese-Beschriftungsvorrichtung für magnetische Zeichen nach Anspruch 1 oder 2,
   **dadurch gekennzeichnet,**
   daß die geneigte Achse der Papierpositionierrolle (9) einen scharfen Winkel mit der Rahmenebene in der Richtung, in welcher sich das Papier vorschiebt, bildet.

4. Lese-Beschriftungsvorrichtung für magnetische Zeichen nach Anspruch 1,
   **dadurch gekennzeichnet,**
   daß die Druckrollen, welche auf die Antriebsrollen wirken, auf elastischen lamellaren Ankern (26) angeordnet sind.

5. Lese-Beschriftungsvorrichtung für magnetische Zeichen nach Anspruch 1,
   **dadurch gekennzeichnet,**
   daß die beiden Antriebsrollen an dem Ausgangsende der Führung durch einen wulstförmigen Riemen (27) umspannt sind und zwischen ihnen drei weitere kleine Führungsrollen (28) vorhanden sind, die auch durch den Riemen umspannt werden, so daß sie zusammen eine senkrechte und bewegliche Trägeroberfläche bilden, welche den magnetischen Leseköpfen (30) gegenüberliegt.

6. Lese-Beschriftungsvorrichtung für magnetische Zeichen nach Anspruch 1,
   **dadurch gekennzeichnet,**
   daß die Einrichtung, welche das Papier in Bewegung setzt, aus einem ersten Stufenhebel gebildet ist, der gelenkig um eine Achse (31) senkrecht zu dem Rahmen (1) ist, deren Hebel, an seinem Widerstandsende (32), ein Rad (34) aufweist, dessen Achse parallel zu den Positionierungsrollen ist, wobei er an seinem Antriebsende (35) den Schub von einem Stab (39) empfängt, welcher durch den Rahmen durch einen Verbindungsschlitz (40) geführt und an den Kern eines Elektromagneten (36) angeschlossen ist, so daß die Aktivierung des Elektromagneten die Annäherung des Widerstandsrades an die Positionierrolle (9) bestimmt, wobei der Elektromagnet gegen eine Torsionspositionierfeder wirkt, welche um die Hebelachse herum angeordnet ist und welche das Rad und die Rollen im Abstand hält, wenn der Elektromagnet nicht aktiviert ist.

7. Lese-Beschriftungsvorrichtung für magnetische Zeichen nach Anspruch 1,
   **dadurch gekennzeichnet,**
   daß der Trägheitsabsorptionsmechanismus, welcher dem Typenrad hilft, sich zu drehen, durch ein Teil mit einer T-förmigen Sektion (44), die an dem Ende der Motorachse befestigt ist, welche dem Lagerende für das Typenrad gegenüberliegt, gebildet ist, wobei das Teil eine Feder (45) aufweist, die um seinen Kern gewunden ist, durch welche eine träge Masse (46), die frei und konzentrisch um ihre Achse (43) rotieren kann, axial unterstützt durch eine Filzscheibe (47) gegen ein Rad (48) gebracht ist, welches ebenfalls auf der Motorachse befestigt ist und welches zusätzlich einen peripheren Flügel mit Signalen trägt, welche in Kombination mit einem Photodetektor (49) die Position der zu druckenden Zeichen lokalisieren.

Fig.1.

EP 0 179 502 B1

Fig.2.

EP 0 179 502 B1

Fig.3.

Fig.4.

Fig.5.

Fig.6.

Fig.7.

Fig.8.

Fig.9.